# EUROPEAN PATENT APPLICATION

(11) **EP 1 872 667 A1**
(43) Date of publication of application: **02.01.2008**
(21) Application number: 01903807.4
(22) Date of filing: 12.02.2001
(51) Int. Cl.: A23L 1/18, A23L 1/2165

(54) **MICROWAVE COOKED SNACK**

(30) Priority: 09.06.2000 ES 200001465
(71) Applicant: Borges, S.A., E-43205 Reus (ES)
(72) Inventor: DURAN VILA, Juan Ramon, E-43205 Reus (ES); GOMEZ ARROYO, Fatima, E-43205 Reus (ES)
(74) Representative: Taliercio, Antonio
(86) International application number: PCT/ES2001/000048
(87) International publication number: WO 2001/093695

(57) **Abstract**

Snack for cooking in the microwave oven which is **characterized by** its raw ingredients: pellet, with a high composition of wheat flour or potato flour, hydrogenized vegetable fat, salt and optional addition of aroma, suitable for cooking in a microwave oven which gives rise to an increase in volume, the product being packaged in a paper bag which is microwave-resistant with a metalclad inner reinforcement.

## Description

This invention refers to a food product which is an appetizer and general snack.

Several food products such as those indicated are well-known, and these are purchased in a ready-to-eat condition, whereas this new food product is dispensed in a raw state for subsequent cooking in a microwave oven by the individual.

The food product involved in this invention consists of group of raw ingredients: pellet, hydrogenized vegetable fat, salt and optionally aroma, suitable for cooking in a microwave oven into which it is placed already wrapped in a paper bag which is microwave-resistant, this cooking causing the bursting and increase in volume of the food product.

The pellet has a composition which is high in wheat flour or potato flour in order to achieve the best expansion of the product in the microwave oven.

The vegetable fat melts at a moderate temperature, thereby assisting the mixing of the ingredients, and solidifies at ambient temperature which means that the oil does not seep through the paper bag.

The aroma must be resistant to the high temperature conditions of the microwaves and shall have its own characteristics while also being required to mix together perfectly with all the other ingredients.

The bag is made of special paper which is resistant to the extreme conditions of the microwaves, such as kraft paper, and, in a specific area it has an inner aluminium reinforcement consisting of metalclad area which gives homogeneous distribution of the heat generated throughout the whole of the bag.

The preferred production of this product is described hereunder.

The ingredients of the product are used in the following proportions: 90% pellet, 6.5% vegetable fat, 3% aroma and 0.5% salt.

A homogeneous mixture is made of the fat (in liquid form), the salt and the aroma at a temperature of between 50 and 55°C, and this mixture is added to the pellet, whose dose has been previously inserted into the paper bag.

The product is retailed with the paper bag folded and inserted into a plastic bag.

Within its essential nature, the invention may be put into practice in other forms of production which only differ in detail from that indicated solely for the purposes of example, which are likewise given the protection which is insisted upon. This food product may, therefore, be obtained with the most suitable ingredients and proportions since it is all included within the claims.

## Claims

1. Snack for cooking in the microwave oven, **characterized by** consisting of a set of raw ingredients: pellet, hydrogenized vegetable fat and salt, suitable for cooking in a microwave oven giving rise to its increase in volume, the product being packaged in a microwave-resistant paper bag.

2. Snack for cooking in the microwave oven, in accordance with claim 1, **characterized** because it also includes raw aroma as an ingredient.

3. Snack for cooking in the microwave oven, in accordance with claim 1, **characterized** because the pellet has a high composition of wheat flour or potato flour.

4. Snack for cooking in the microwave oven, in accordance with claim 1, **characterized** because the vegetable fat melts at a moderate temperature and solidifies at ambient temperature.

5. Snack for cooking in the microwave oven, in accordance with claim 2, **characterized** because the aroma is resistant to the high temperature conditions imposed by microwaves.

6. Snack for cooking in the microwave oven, in accordance with claim 1, **characterized** because the bag has an inner aluminium reinforcement which consists of a metalclad area.
